# FASCICULE DE BREVET EUROPEEN

(11) **EP 0 424 226 B1**
(45) Date de publication et mention de la délivrance du brevet: **22.09.1993**
(21) Numéro de dépôt: 90402865.1
(22) Date de dépôt: 15.10.1990
(51) Int. Cl.: B65B 7/16, B65B 43/52

(54) **Machine de conditionnement assurant la fermeture de barquettes de conditionnement ou similaires après leur remplissage, et ce par soudure d'un film en matière thermoplastique**
Verpackungsmaschine zum Verschliessen von Verpackungsschalen oder dergleichen nach ihrer Befüllung, mittels einer heisssiegelbaren Folie
Packaging machine for closing packaging trays or the like after they have been filled, by means of a thermoplastic sealing film

(30) Priorité: 20.10.1989 FR 8913754
(43) Date de publication de la demande: 24.04.1991
(73) Titulaire: MECAPLASTIC, F-93170 Bagnolet (FR)
(72) Inventeur: Robache, Patrick, F-75020 Paris (FR)
(74) Mandataire: Tony-Durand, Serge

(56) Documents cités:
- DE-B- 1 216 766
- FR-A- 2 137 281

## Description

La présente invention concerne les machines de conditionnement assurant la fermeture de barquettes de conditionnement ou similaires après leur remplissage, et ce par soudure, d'un film thermo-plastique sur les bords de ces barquettes, cette soudure étant réalisée sous vide ou sous gaz neutre. Ces machines sont utilisées pour le conditionnement de nombreux produits alimentaires, par exemple des plats cuisinés ou des produits de charcuterie. Une telle machine est connue du FR-A-2 137 281.

Dans les machines de ce genre, les barquettes de conditionnement arrivent une à une à l'une des extrémités de la machine correspondante pour être ensuite acheminée l'une derrière l'autre en regard du poste de remplissage puis jusqu'au poste de soudure du film de fermeture, et enfin jusqu'au poste d'évacuation des barquettes fermées. Actuellement le transport des barquettes de conditionnement entre ces divers postes est assuré par plusieurs séries distinctes de moyens différents d'entraînement ou de transfert. Dans la plupart des cas, il est prévu un convoyeur à bande ou similaire à l'entrée de la machine pour acheminer les barquettes l'une derrière l'autre en regard du poste de remplissage, puis jusqu'en un point situé en amont du poste de soudure. Le transport de chaque barquette jusqu'au poste de soudure est ensuite assuré par des pinces latérales de transfert qui reviennent en arrière après mise en place d'une barquette dans le poste de soudure. L'extraction de chaque barquette hors du poste de soudure est également assurée par d'autres pinces latérales de transfert effectuant un mouvement de va et vient. Enfin l'évacuation est réalisée au moyen d'un convoyeur à bande ou similaire.

Comme on le comprend aisément, l'utilisation de plusieurs séries distinctes de moyens d'entraînement ou de transfert entraîne une certaine complexité des machines en cause, ainsi qu'un prix de revient relativement élevé. Par ailleurs l'emploi de pinces latérales de transfert implique une synchronisation parfaite du fonctionnement de celles-ci avec celui du poste de soudure. Du reste, les systèmes de transfert au moyen de pinces latérales nécessitent de fréquentes opérations de réglages.

Pour toutes ces raisons, il serait préférable de pouvoir utiliser un convoyeur unique pour assurer les divers déplacements des barquettes de conditionnement sur toute la longueur de la machine. Toutefois, ceci soulève d'importantes difficultés, car les moyens d'entraînement des barquettes ne doivent pas entraver le bon fonctionnement des pièces mobiles du poste de soudure. En effet, un tel poste comprend une enceinte étanche constituée par deux pièces mobiles complémentaires, à savoir une cuve inférieure relevable et une cloche supérieure susceptible d'être appliquée sur celle-ci pour pincer entre elles les bords d'une barquette de conditionnement et le film supérieur de fermeture. Pour permettre le libre mouvement de ces pièces, il convient donc que les organes d'entraînement des barquettes de conditionnement n'empiètent en aucune façon sur la trajectoire de déplacement des pièces mobiles du poste de soudure. C'est du reste la raison pour laquelle le transport de chaque barquette dans le poste de soudure, puis son évacuation hors de celui-ci étaient assurés jusqu'ici par des pinces latérales de transfert. Mais, comme déjà indiqué, cette solution présente des inconvénients importants.

C'est pourquoi, la présente invention a pour but de réaliser une machine de conditionnement du type en cause dans laquelle il est prévu un convoyeur unique agencé de manière à ce que les organes d'entraînement prévus dans celui-ci n'entravent en aucune façon le bon fonctionnement du poste de soudure.

A cet effet, cette machine est caractérisée en ce que :
- l'entraînement des barquettes de conditionnement est assuré, sur toute la longueur de la machine, par le brin horizontal supérieur d'un convoyeur unique comprenant une série de barrettes transversales aptes à pousser chacune une des barquettes et qui sont attachées à des moyens d'entraînement formant avec elles un circuit fermé, les barquettes glissant sur des plateaux ou pistes de guidage,
- les moyens de commande de ce convoyeur sont aptes à imprimer une avance de celui-ci jusqu'à ce qu'une barquette soit amenée sur un plateau situé à l'intérieur du poste de soudure, puis un léger recul jusqu'à ce que la barrette de poussée correspondante soit dégagée en arrière de ce poste, afin de ne pas entraver la fermeture des pièces mobiles de celui-ci, et enfin une nouvelle avance des barrettes de poussée après achèvement de l'opération de soudure.

Grâce à cet agencement, l'entraînement des barquettes peut effectivement être assuré par un convoyeur unique sans que les organes de celui-ci constituent une entrave au bon fonctionnement du poste de soudure. De plus, la conception prévue entraîne une simplification importante de l'ensemble de la machine, et par suite une réduction notable de son prix de revient, tout en améliorant les conditions de fonctionnement grâce à la présence d'un convoyeur unique.

Cependant, d'autres particularités et avantages de la machine de conditionnement selon l'invention apparaîtront au cours de la description suivante. Celle-ci est donnée en référence aux dessins annexés à simple titre indicatif, et sur lesquels :
la figure 1 est une vue schématique en élévation de côté, avec arrachement, d'une machine de conditionnement selon l'invention,
la figure 2 est une vue en coupe partielle longitudinale de cette machine à l'endroit du poste de fermeture par soudure,
la figure 3 est également une vue partielle en coupe longitudinale, mais en un autre point de la machine, en l'occurrence à l'endroit des moyens de contrôle de position qui sont prévus dans l'exemple représenté,
la figure 4 est une vue en coupe transversale selon la ligne IV-IV de la figure 3.

Comme déjà indiqué, la présente machine est destinée à assurer le conditionnement de produits alimentaires à l'intérieur de barquettes 1 de conditionnement, ou récipients similaires, dont la fermeture est assurée par soudure d'un film 2 en matière plastique, sur les bords de chacune de ces barquettes.

Il s'agit, en l'occurrence, de barquettes rigides, ou récipients similaires de conditionnement, moulés en une matière thermo-plastique de nature telle qu'il soit ensuite possible de souder le film 2 de fermeture. A l'une de ses extrémités, cette machine comporte un appareil distributeur 3 apte à délivrer de telles barquettes 1, une à une, sur l'extrémité de départ d'un convoyeur unique désigné par la référence générale 4, qui s'étend sur toute la longueur de la machine. Près de son extrémité opposée, celle-ci comporte un poste de soudure désigné par la référence générale 5. Celui-ci est installé à l'intérieur d'un bâti 6 portant également une goulotte 7 d'évacuation des barquettes fermées.

Le bâti 6 est raccordé au carter du distributeur 3 par deux longerons latéraux 8 s'étendant en regard du poste de remplissage des barquettes de conditionnement. Le convoyeur unique 4 part dont de l'appareil distributeur 3 et s'étend sur toute la longueur des longerons 8, puis sur toute la longueur du bâti 6, pour constituer un circuit fermé sur lui-même.

Ce convoyeur comprend une série de barrettes transversales 9 dont les extrémités sont attachées à deux chaînes latérales 10 et 11 formant chacune un circuit fermé. Ces chaînes sont engagées sur divers pignons de renvoi 12 dont l'un au moins est accouplé avec un mécanisme d'entraînement (non représenté).

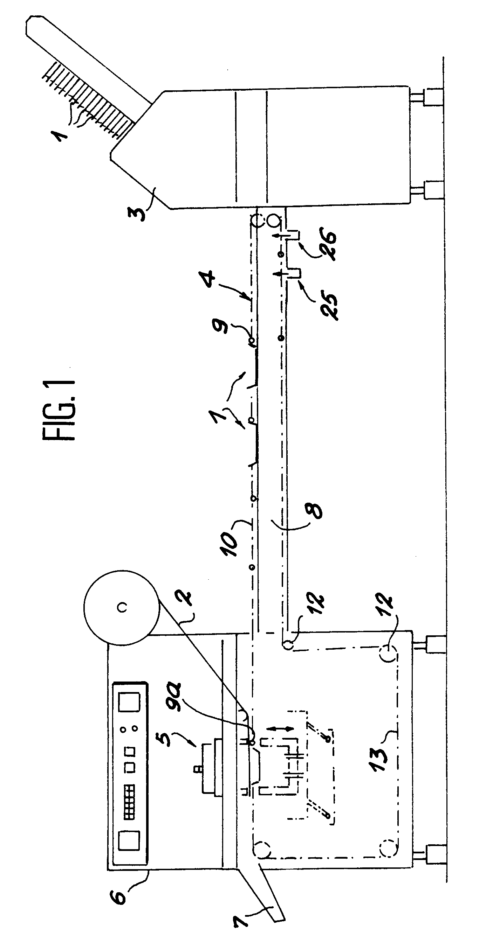

Le brin supérieur du circuit ainsi constitué s'étend horizontalement sur toute la longueur de la machine, au dessus du niveau de rails horizontaux 14 de guidage sur lesquels reposent les barquettes à entraîner. Ce brin supérieur du convoyeur constitue donc l'élément d'entraînement des barquettes 1 les unes derrière les autres. En effet, chacune des barrettes 9 se trouvant située sur le brin supérieur du convoyeur assure l'entraînement d'une barquette 1 par poussée contre le côté arrière de celle-ci. Quant au brin inférieur de retour de ce circuit, il forme une large boucle 13 à l'intérieur de la partie inférieure du bâti 6 pour contourner les pièces inférieures du poste de soudure 5 et les mécanismes faisant partie de ce poste (voir figure 1).

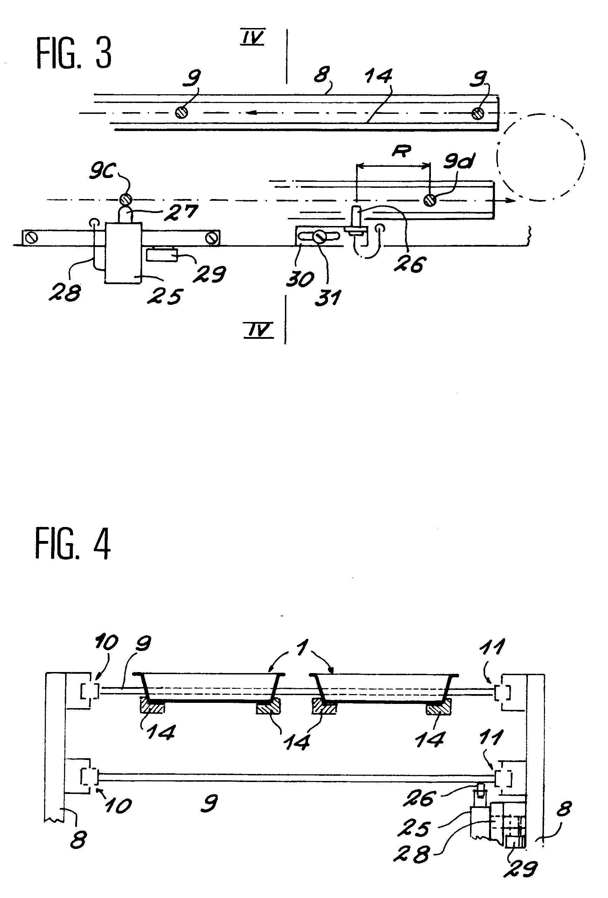

Dans l'exemple représenté sur la figure 4, il est prévu deux séries de rails de guidage 14 pour constituer deux pistes distinctes permettant de traiter deux séries parallèles de barquettes 1 de conditionnement. Cependant, la présente machine pourrait fort bien ne comporter qu'une seule piste de guidage ou, au contraire, trois pistes parallèles, ou même plus. Suivant le cas, il existe donc un poste unique 5 de soudure ou, au contraire, plusieurs postes de soudure, situés côte à côte à l'intérieur du bâti 6.

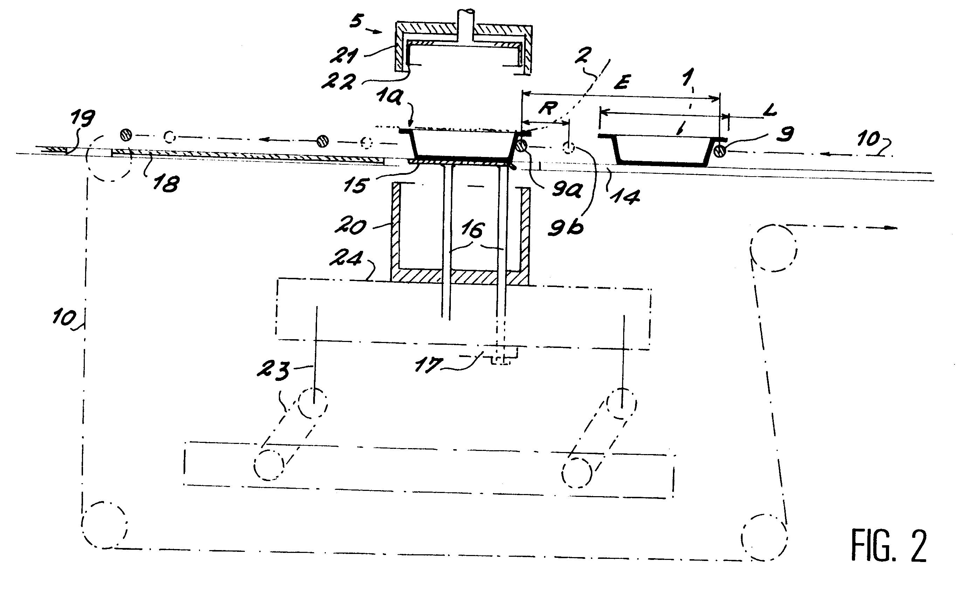

A l'endroit de chacun de ces postes de soudure, il est prévu un plateau horizontal 15 destiné à recevoir une barquette 1 pour la soudure d'une portion du film de fermeture 2 sur les bords de celle-ci. Ce plateau est porté par deux colonnes 16 fixées sur un support 17 solidaire du bâti 6. A la suite du plateau 15, il est prévu d'autres rails horizontaux 18 similaires aux rails 14 et qui sont destinés à recevoir chaque barquette 1 après soudure d'une portion du film de fermeture 2 sur celle-ci. Toutefois, ces rails 18 comportent une interruption 19 pour le passage des chaînes d'entraînement 10 et 11, ainsi que des barrettes transversales de poussée 9, comme cela apparaît sur la figure 2.

Comme déjà connu, le poste de soudure 5 comprend deux pièces mobiles complémentaires aptes à constituer une enceinte étanche permettant de réaliser une soudure sous vide ou sous gaz neutre, à savoir une cuve inférieure 20 et une cloche supérieure 21 renfermant une tête de soudure 22. Des moyens mécaniques appropriés, comprenant par exemple des bielles d'actionnement 23, permettent de commander le relèvement du support 24 de la cuve inférieure 20, de façon que les bords supérieurs de celle-ci viennent se placer sous le rebord de la barquette la qui se trouve située à l'intérieur du poste de soudure. D'autres moyens mécaniques d'entraînement (non représentés) permettent de faire descendre la cloche supérieure 21 contre la cuve inférieure 20 pour constituer une enceinte étanche. D'autres moyens mécaniques encore assurent la descente de la tête de soudure 22 dans sa position de travail.

Le dispositif mécanique d'entraînement du convoyeur unique de la présente machine est apte à imprimer une avance de ce convoyeur jusqu'à ce qu'une barquette 1 soit située dans la position 1a à l'intérieur du poste de soudure sur le plateau 15, c'est-à-dire dans l'axe de ce poste. A cet effet, la barrette transversale de poussée, assurant l'avancement de cette barquette, est amenée jusque dans la position 9a représentée sur la figure 2, position pour laquelle la barquette correspondante se trouve placée pour sa part dans la position 1a. La conception du dispositif de commande du convoyeur est telle que celui-ci est alors immédiatement arrêté dans sa position correspondante et un mouvement limité de recul lui est imprimé sur une distance R. La valeur de ce recul doit être telle que la barrette de poussée correspondante 9a se trouve amenée en arrière dans une position 9b pour laquelle elle n'empiète plus sur la trajectoire des pièces mobiles du poste de soudure, et plus précisément sur la trajectoire de la cuve inférieure 20 de ce poste (voir figure 2). Bien entendu, les chaînes latérales d'entraînement 10 et 11 n'empiètent pas non plus sur la trajectoire des pièces mobiles du poste de soudure, car elles sont disposées suffisamment à l'écart, de part et d'autre de ce poste.

Après que la barre de poussée ait été ramenée dans sa position 9b de recul, le convoyeur unique se trouve maintenu à l'arrêt par son dispositif de commande et ce pendant un temps suffisant pour que s'effectue la fermeture du film de fermeture 2 sur la barquette correspondante 1a. Dès que cette opération est achevée, le dispositif de commande remet automatiquement en fonctionnement le convoyeur vers l'avant. Dans ces conditions, les différentes barrettes 9 de poussée, qui avaient toutes subi un mouvement de recul R, viennent à nouveau en contact avec l'extrémité arrière des barquettes 1 situées devant elles, jusqu'à ce qu'une autre barquette soit amenée dans la position 1a à l'intérieur du poste de soudure, et ainsi de suite.

En conséquence, le convoyeur unique effectue un mouvement d'avance pas à pas avec une période d'arrêt correspondant au temps de soudure du film de fermeture sur une barquette de conditionnement, cette période d'arrêt étant précédée d'un léger mouvement de recul R, tel que défini précédemment. Dans ces conditions, il convient que l'écart E, prévu entre deux barrettes successives 9 de poussée, soit supérieur à la somme de la longueur L de chaque barquette 1 et du recul R imprimé périodiquement au convoyeur. Le respect de cette condition est nécessaire pour que chaque barrette de poussée puisse disposer de la liberté voulue de recul.

Le dispositif de commande du convoyeur comporte des moyens de contrôle de l'arrivée d'une barquette de conditionnement dans la position 1a à l'intérieur du poste de soudure 5. Ces moyens de contrôle sont aptes à commander alors le recul R des barrettes de poussée, comme décrit précédemment.

D'autres moyens de contrôle sont prévus pour surveiller l'exécution du recul ainsi imprimé au convoyeur. Ces seconds moyens de contrôle sont pour leur part aptes à provoquer l'arrêt du convoyeur dès l'achèvement de ce recul, afin qu'il reparte ensuite en avant après exécution de l'opération de soudure.

Dans l'exemple représenté, ces deux séries de moyens de contrôle sont constitués par deux micro-contacts 25 et 26 disposés en regard du brin inférieur de retour du convoyeur, et ce dans des positions très particulières, de façon à être actionnés, l'un et l'autre respectivement, par deux barrettes transversales déterminées 9c et 9d de ce convoyeur.

En l'occurrence le contacteur 25 est disposé de façon que son organe de commande 27 soit actionné par chaque barrette transversale du brin inférieur du convoyeur lorsque celle-ci parvient dans la position 9c sur la figure 3. Or l'agencement du convoyeur est tel que lorsqu'une barrette de celui-ci parvient dans cette position, une autre de ses barrettes est parvenue dans la position 9a représentée à la figure 2, c'est-à-dire dans la position d'avancée maximum à l'intérieur du poste de soudure avant exécution d'une opération de soudure. Or, ce contacteur 25 est branché sur un circuit électrique commandant l'arrêt immédiat du moteur d'entraînement du convoyeur et son fonctionnement en sens inverse pour imprimer le recul limité prévu R à celui-ci.

Quant au contacteur 26 il est disposé dans une position telle qu'il soit actionné par la barrette 9d située en avant de lui lorsque celle-ci a reculé d'une distance R à la suite du mouvement de recul imprimé au convoyeur. Ce contacteur 26 commande alors l'arrêt du convoyeur pendant une période égale ou légèrement supérieure au temps d'exécution de l'opération de soudure, après quoi le dispositif d'entraînement se met à nouveau en fonctionnement de façon automatique pour une nouvelle avance du convoyeur jusqu'à ce qu'une autre barquette de conditionnement vienne se placer à l'intérieur du poste de soudure 5.

De préférence, le premier contacteur 25 est porté par un support 28 monté coulissant sur le longeron 8 correspondant en étant immobilisé dans la position voulue au moyen d'une vis de blocage 29. Ceci permet de régler très exactement la position du contacteur 25. Pour sa part, le second contacteur 26 peut également être porté par un support mobile 30 susceptible d'être immobilisé dans la position voulue au moyen d'une vis de blocage 31.

Le convoyeur unique ainsi prévu est donc en mesure d'assurer les différents déplacements nécessaires des barquettes 1 de conditionnement sur toute la longueur de la machine, et ce sans gêner en quoi que ce soit le fonctionnement du poste de soudure. Or, l'existence d'un convoyeur unique présente des avantages importants par rapport à la solution consistant à prévoir plusieurs types différents de convoyeurs ou autres moyens de transfert. En effet, on obtient ainsi, sans autre mesure, un synchronisme parfait des déplacements. Par ailleurs, la structure de la machine s'en trouve considérablement simplifiée, ce qui a pour avantage de réduire le prix de revient de l'ensemble. De plus, la machine selon l'invention présente une très grande fiabilité et ne nécessite pas des opérations répétées de réglage ou de mise au point.

Il faut observer que cette machine et son convoyeur unique ne sont pas limités à l'exemple décrit précédemment. En effet, les deux séries de contrôle, destinées à surveiller d'une part l'arrivée d'un barquette de conditionnement dans le poste de soudure et d'autre part l'exécution du mouvement de recul du convoyeur, pourraient être réalisées de façons différentes. Ainsi, en ce qui concerne les premiers moyens de contrôle, le contacteur 25 pourrait être remplacé par un détecteur à fonctionnement optique, ou autre, apte à détecter l'arrivée d'une barquette de conditionnement à l'intérieur du poste de soudure. Quant au second contacteur 26, il pourrait être remplacé par des moyens limitant automatiquement le fonctionnement du moteur d'entraînement dans le sens correspondant au recul du convoyeur. Du reste, au lieu de moyens de détection ou de contrôle, il serait possible de prévoir l'asservissement du dispositif de commande du convoyeur à un programmateur déterminant automatiquement l'importance de chaque mouvement d'avance du convoyeur, puis l'importance du mouvement de recul, etc.

Comme il a déjà été indiqué, la présente machine est destinée à assurer le conditionnement de produits alimentaires ou autres dans des barquettes 1, ou récipients similaires de conditionnement, en assurant la fermeture de ceux-ci par soudure d'un film 2. Cette machine peut être réglée pour traiter des barquettes de dimensions différentes. A cet effet, les rails de guidage 14 peuvent être montés de façon mobile sur des supports fixes afin de pouvoir être écartés plus ou moins suivant le cas. Dans un tel cas, les pièces du poste de soudure doivent alors être également remplacées par des pièces de dimensions différentes.

## Revendications

1. Machine de conditionnement pour la fermeture de barquettes de conditionnement ou similaires après remplissage, et ce par soudure, sous vide, d'un film en matière thermo-plastique sur les bords de ces barquettes, comportant des moyens mécaniques d'entraînement de celles-ci l'une derrière l'autre en regard du poste de remplissage, puis jusqu'au poste de soudure du film de fermeture, et enfin jusqu'au poste d'évacuation des barquettes fermées, caractérisée en ce que :
- l'entraînement des barquettes de conditionnement (1) est assuré, sur toute la longueur de la machine, par le brin supérieur horizontal d'un convoyeur unique comprenant une série de barrettes transversales (9) aptes à pousser chacune une des barquettes (1) et qui sont attachées à des moyens d'entraînement (10, 11) formant avec elles un circuit fermé, les barquettes (1) glissant sur des plateaux ou pistes de guidage (14, 18),
- les moyens de commande de ce convoyeur sont aptes à imprimer une avance de celui-ci jusqu'à ce qu'une barquette (1) soit amenée sur un plateau (15) situé à l'intérieur du poste de soudure (5), puis un léger recul (R) jusqu'à ce que la barrette de poussée correspondante soit dégagée en arrière de ce poste, afin de ne pas entraver la fermeture des pièces mobiles de celui-ci, et enfin une nouvelle avance des barrettes de poussée (9) après achèvement de l'opération de soudure.

2. Machine de conditionnement selon la revendication 1, caractérisée en ce que l'écartement (E) prévu entre les barrettes de poussée (9) est supérieur à la somme de la longueur (L) des barquettes (1) et de la valeur (R) du recul imprimé à chaque barquette devant le poste de soudure (5).

3. Machine de conditionnement selon la revendication 1 ou 2, caractérisée en ce que les moyens de commande du convoyeur unique comprennent :
- d'une part des moyens de contrôle de l'arrivée d'une barquette de condionnement (1) à l'intérieur du poste de soudure (5), ces moyens de contrôle étant aptes à commander alors le recul (R) des barrettes de poussée,
- d'autre part des moyens de contrôle du recul imprimé périodiquement à ces barrettes, ces moyens de contrôle étant aptes à provoquer l'arrêt du convoyeur dès l'achèvement du recul, afin qu'il reparte ensuite en avant, après exécution de l'opération de soudure.

4. Machine de conditionnement selon l'une des revendications précédentes, caractérisée en ce que les moyens de contrôle de l'arrivée d'une barquette de conditionnement à l'intérieur du poste de soudure sont constitués par un contacteur électrique (25) convenablement disposé pour être actionné par une des barrettes de poussée (9), lorsqu'une autre de ses barrettes est parvenue à l'endroit de son avance maximum possible dans le poste de soudure pour que la barquette de conditionnement correspondante se trouve dans l'axe de ce poste.

5. Machine de conditionnement selon l'une des revendications précédentes, caractérisée en ce que les moyens de contrôle du recul imprimé périodiquement aux barrettes de poussée (9) sont constitués par un contacteur électrique (26) convenablement disposé pour être actionné par une des barrettes de poussée (9) , lorsque la barrette de poussée (9) située à l'endroit du poste de soudure (5) a effectué le recul prévu (R) pour que celle-ci soit dégagée hors de ce poste.

## Patentansprüche

1. Verpackungsmaschine zum Verschließen von Verpackungsschalen oder dergleichen nach dem Befüllen durch Vakuumschweißen einer Thermoplastfolie an die Ränder dieser Schalen, die mechanische Mittel aufweist, um letztere nacheinander vor die Befüllstation, dann bis zur Verschließfolien-Schweißstation und schließlich zur Ausgabestation der verschlossenen Schalen zu befördern,
dadurch gekennzeichnet,
daß die Beförderung der Verpackungsschalen (1) über die gesamte Länge der Verpackungsmaschine durch das waagrechte Oberband eines Einzelförderers gewährleistet wird, das eine Reihe von Querstegen (9) aufweist, die geeignet sind, jeweils eine der Schalen (1) zu schieben, und die an Mitnehmermitteln (10, 11) befestigt sind, die mit ihnen zusammen einen geschlossenen Kreis bilden, wobei die Schalen (1) über Führungsplatten oder -bahnen (14, 18) gleiten,
daß die Steuermittel dieses Förderers geeignet sind, letzteren in eine Vorschubbewegung zu versetzen, bis eine Schale (1) auf eine in der Schweißstation (5) befindliche Platte (15) geschoben wird, ihn sodann in eine leichte Rückwärtsbewegung (R) zu versetzen, bis der entsprechende Vorschubsteg sich rückwärts aus dieser Station entfernt, um nicht das Schließen von deren beweglichen Teilen zu behindern, und nach Beendigung des Schweißvorgangs schließlich die Vorschubstege (9) erneut in eine Vorschubbewegung zu versetzen.

2. Verpackungsmaschine nach Anspruch 1, dadurch gekennzeichnet, daß der zwischen den Vorschubstegen (9) vorgesehene Abstand (E) größer ist als die Summe aus der Länge (L) der Schalen (1) und aus der Größe (R) der Rückwärtsbewegung, in die jede Schale vor der Schweißstation (5) versetzt wird.

3. Verpackungsmaschine nach Anspruch 1 oder 2, dadurch gekennzeichnet, daß die Steuermittel des Einzelförderers bestehen aus:
- einerseits den Kontrollmitteln für die Ankunft einer Verpackungsschale (1) in der Schweißstation (5), wobei diese Kontrollmittel geeignet sind, sodann die Rückwärtsbewegung (R) der Vorschubstege zu steuern,
- andererseits den Kontrollmitteln für die Rückwärtsbewegung, in die diese Vorschubstege in regelmäßigen Abständen versetzt werden, wobei diese Kontrollmittel geeignet sind, das Anhalten des Förderers zu bewirken, sobald die Rückwärtsbewegung vollendet ist, damit er sich daraufhin wieder vorwärts in Bewegung setzt, nachdem der Schweißvorgang ausgeführt ist.

4. Verpackungsmaschine nach einem der vorhergehenden Ansprüche, dadurch gekennzeichnet, daß die Kontrollmittel für die Ankunft einer Verpackungsschale in der Schweißstation aus einem elektrischen Schalter (25) bestehen, der in geeigneter Weise angeordnet ist, um durch einen der Vorschubstege (9) betätigt zu werden, sobald ein anderer dieser Stege seine maximale Vorschubposition in der Schweißstation erreicht hat, so daß sich die entsprechende Verpackungsschale auf der Achse dieser Station befindet.

5. Verpackungsmaschine nach einem der vorhergehenden Ansprüche, dadurch gekennzeichnet, daß die Kontrollmittel für die Rückwärtsbewegung, in die die Vorschubstege (9) in regelmässigen Abständen versetzt werden, aus einem elektrischen Schalter (26) bestehen, der in geeigneter Weise angeordnet ist, um durch einen der Vorschubstege (9) betätigt zu werden, sobald der Vorschubsteg (9), der sich an der Schweißstation (5) befindet, die vorgesehene Rückwärtsbewegung (R) ausgeführt hat, damit er sich aus dieser Station entfernt.

## Claims

1. A packaging machine for closing packaging trays or the like after they have been filled, by means of a vacuum-welded thermoplastic sealing film welded on the edges of said trays, comprising mechanical means for driving said trays one behind the other into registry with the filling station and further to the welding station of the sealing film, and finally to the delivery station of the sealed trays,
**characterized** in that :
- the drive of the packaging trays (1) is carried out throughout the length of the machine, by the horizontal upper course of a single conveyor belt carrying a series of transverse small bars (9) adapted for each one of them to push along one of the trays (1), and attached to driving means (10, 11) forming therewith a closed circuit, while the trays (1) slide over guiding plates or tracks (14, 18),
- the means for driving the conveyor belt are adapted for imparting thereto a forward stroke until one tray (1) is brought upon a plate (15) located inside the welding station (5) followed by a slight backward movement (R) until the corresponding pusher bar (9) is disengaged behind the welding station so that it will not hinder the closing of the movable parts of said station, and finally a further forward stroke of the pusher bars (9) after the completion of the welding operation.

2. A packaging machine according to Claim 1, characterized in that the spacing (E) between the pusher bars (9) is wider than the sum total of the length (L) of the trays (1) and of the value (R) of the backward movement imparted to each tray in front of the welding station (5).

3. A packaging machine according to Claim 1 or 2, characterized in that the means for controlling the single conveyor belt comprise :
- on the one hand, means for checking the arrival of a packaging tray (1) inside the welding station (5), said checking means being adapted for thereupon controlling the backward movement (R) of the pusher bars,
- on the other hand, means for controlling the backward movement being periodically imparted to said bars, said control means being adapted for causing the conveyor to stop as soon as the backward movement is completed, in order that the conveyor will resume its forward movement after the welding operation is completed.

4. A packaging machine according to one of the preceding Claims, characterized in that the control means for checking the arrival of a packaging tray inside the welding station are constituted by an electric switch (25) suitably disposed for being actuated by one of the pusher bars (9) when another one of said bars has reached the location of its maximum forward stroke in the welding station for the corresponding packaging tray to find itself aligned with the axis of said welding station.

5. A packaging machine according to one of the preceding Claims, characterized in that the means for controlling the backward movement being periodically imparted to the pusher bars (9) are constituted by an electric switch (26) suitably disposed for being actuated by one of the pusher bars (9) when the pusher bar (9) located at the site of the welding station (5) has carried out the backward movement (R) intended for said bar to become disengaged out of said welding station.
